(19) Europäisches Patentamt
European Patent Office
Office européen des brevets

(11) **EP 1 799 044 B1**

(12) **EUROPEAN PATENT SPECIFICATION**

(45) Date of publication and mention
of the grant of the patent:
**07.04.2010 Bulletin 2010/14**

(51) Int Cl.:
*A23D 7/01* (2006.01)     *A23L 1/00* (2006.01)
*A23L 1/19* (2006.01)

(21) Application number: **05787022.2**

(22) Date of filing: **21.09.2005**

(86) International application number:
**PCT/EP2005/010320**

(87) International publication number:
**WO 2006/039991 (20.04.2006 Gazette 2006/16)**

(54) **AERATED OIL IN WATER EMULSION COMPRISING VEGETABLE FAT**

PFLANZENFETTHALTIGE GESCHÄUMTE ÖL-IN-WASSER-EMULSION

EMULSION HUILE DANS EAU AEREE COMPRENANT DE LA GRAISSE VEGETALE

(84) Designated Contracting States:
**AT BE BG CH CY CZ DE DK EE ES FI FR GB GR HU IE IS IT LI LT LU LV MC NL PL PT RO SE SI SK TR**

(30) Priority: **13.10.2004 EP 04077837**

(43) Date of publication of application:
**27.06.2007 Bulletin 2007/26**

(73) Proprietors:
• **Unilever N.V.**
**3013 AL Rotterdam (NL)**
Designated Contracting States:
**AT BE BG CH CZ DE DK EE ES FI FR GR HU IS IT LI LT LU LV MC NL PL PT RO SE SI SK TR**
• **Unilever PLC**
**London**
**EC4Y 0DY (GB)**
Designated Contracting States:
**CY GB IE**

(72) Inventors:
• **ADAMCIKOVA, Maria**
**18621 Prague 8 (CZ)**
• **FABIAN, Jürgen, H,**
**Unilever Deutschland GmbH Factory Heilbronn**
**DE-74074 Heilbronn (DE)**

• **KLEINHERENBRINK, Franciscus, A, M,**
**Unilever R & D**
**NL-3133 AT Vlaardingen (NL)**
• **LAGERWAARD, Cornelis, A**
**Unilever R & D Vlaardingen**
**NL-3133 AT Vlaardingen (NL)**

(74) Representative: **Corsten, Michael Allan et al**
**Unilever Patent Group**
**Olivier van Noortlaan 120**
**3133 AT Vlaardingen (NL)**

(56) References cited:
**EP-A- 0 157 594     EP-A- 0 285 198**
**EP-A- 0 777 969     EP-A- 1 284 106**
**WO-A- 94/12063     WO-A- 03/053174**
**US-A- 3 682 656     US-A- 4 578 278**
**US-B1- 6 579 557**

• **SMITH, A. K., GOFF, H.D., AND KAKUDA, Y.: "Whipped cream structure measured by quantitative stereology" JOURNAL OF DAIRY SCIENCE., vol. 82, 1999, pages 1635-1642, XP002357305 USAMERICAN DAIRY SCIENCE ASSOCIATION. CHAMPAIGN, ILLINOIS.**

## Description

The present invention deals with an aerated edible oil in water emulsion containing a fat phase comprising a vegetable fat and a process for its preparation.

## Background and prior art

Water continuous edible emulsions such as creams, crème fraiche, ice cream, whipping cream, cooking cream, fresh cheese, acidified spreads such as those disclosed in EP-A-841856 are well known in the art. These products generally contain at least some fat to contribute to mouthfeel and consistency of the emulsion. Traditionally these products are derived from fresh cream and hence contain considerable, amounts of dairy fat. The traditional high fat content and the dairy fat make them less suitable for use in a low caloric diet, which contributes to a healthy style of living.

EP-A-848590 relates to a creamy cultured, dairy-based water continuous spread wherein part of the fat is a vegetable fat. Although the products have a taste, appearance and after-taste similar to butter, they do not show the desired quick melting behaviour and texture that is known from water continuous dairy products such as fresh cheese type of products and the products disclosed in WO-A-97/0466.

US-B-6,497,914 describes the difficulties encountered in the production of whipping cream using vegetable fats and oils instead of dairy fat. Vegetable oils are generally known to have a healthy connotation e.g. because of their relatively high unsaturated fatty acid content. It is disclosed that stable products can only be obtained either by the use of a great amount of emulsifier or by use of a lauric fat ingredient in combination with fat ingredients which are rich in SUS-type triglycerides wherein examples of these are palm oil, illipe butter, shea butter.

WO-94/12063 describes food products, among which are low fat spread wherein gas cells have been incorporated for visual appearance, organoleptic texture and creamy perception. The gas cells are thermodynamically stable in excess of two weeks. The gas cells are pre-made and later added to the products. These gas cells have an average particle size of less than 20 $\mu$m.

WO-03/053174 discloses the use of protein-coated air-bubbles as an anti-spatter agent. Also here the air-bubbles are pre-made. All products are fat-continuous.

US-A-4,578,278 relates to the use of egg-white foam to add to mayonnaise type of products.

Commercial product Rama Creme Bonjour™ is a quarky cheese comprising 24% quark and 26% vegetable fats. This water continuous product with vegetable fat has a good mouthfeel and it easily spreads on bread.

It is an object of the invention to provide an acidified oil in water emulsion wherein the fat comprises a vegetable fat, which composition shows a good mouthfeel, and a texture which is suitable for use of the product as a spreading agent like margarine or fresh cheese.

## Summary of the invention

We have surprisingly found that the inclusion of a gas in a water continuous acidified product comprising vegetable fat results in a product with a mouthfeel and melting behaviour which is quick and closer to the mouthfeel and melting behaviour of dairy type products than conventional products that are not aerated.

Therefore the present invention provides an acidified edible oil in water emulsion with a pH from 3.5 to 6, comprising protein and from 1 to 40 wt% of a fat wherein the fat comprises 20 to 100 wt % of a vegetable fat composition on total fat, and wherein the composition comprises from 4 to 15 volume% of a gas, wherein the average diameter of the gas bubbles is in the range of from 50 to 500$\mu$m.

In another aspect the invention relates to a process for the preparation of such products.

## Detailed description

In this specification where wt% is used, it means weight percentage on total product unless otherwise is indicated.

A good mouthfeel may be attributed by a quick and pleasant melting on consumption, and leaving no waxy aftertaste.

A texture which is suitable for use of the product as a spreading agent entails that the product can be spread on a piece of bread without tearing the bread and leaving a nice, even layer on the piece of bread.

The present invention relates to edible oil in water emulsions.

The emulsion comprises from 1 to 40 wt% fat. The fat may be a single fat or a fat blend. Preferred emulsions comprise from 5 to 40 wt% fat, more preferred from 10 to 35 wt% fat.

The fat comprises from 20 to 100 wt% of a vegetable fat. It is preferred that the fat comprises from 50 to 100 wt% vegetable fat. The remainder of the fat is preferably dairy fat.

Preferably the solids content of the fat or fat blend that forms the dispersed phase is from 5 to 60% at 10 °C, from 1 to 50% at 20 °C and from 0 to 10% at 35 °C. More preferred the solids content is from 5 to 40% at 10 °C, from 7.5 to 30 at 20° C and from 0 to 5% at 35° C.

Even more preferred the same profile of solid fat is determined for the isolated fat phase of the product after it has been removed from the product.

The above solid fat profile may be obtained by a variety of fats or combination of fats in a fat blend. The fat is preferably selected from the group comprising coconut oil, palm oil, palm kernel oil, soybean oil, rapeseed oil, sunflower oil, safflower oil, fully or partially hardened fractions thereof or combinations thereof.

More preferably the fat is selected from the group comprising coconut oil, hardened coconut oil, palm oil fractions or a combination thereof.

Optionally the fat is an interesterified fat blend. In a further preferred embodiment, the total amount of saturated fatty acid components in the fat is less than 45 wt%, based on the total amount of fatty acid components, and further preferred less than about 30 wt%.

The method to determine solid fat content is described in AOCS official method Cd 16b-93 (direct method, parallel; based on NMR as described in Fette, Seifen, Anstrichmittel 80, (1978), 180-186.

We have surprisingly found that the mouthfeel and spreadability of acidified oil in water emulsions comprising a considerable level of vegetable fat can be improved by including a gas in these products.

The products according to the invention comprise from 4 to 15 volume% of a gas. More preferred the products comprise from 7 to 12 volume% of a gas. The method to determine the volume% gas in a product is described in the examples.

The gas may be any gas suitable for inclusion in food products but is preferably selected from the group comprising nitrogen, carbon dioxide, argon, air or a combination thereof. Nitrogen is most preferred.

The gas is preferably included in the product in such a way that the gas bubbles are not visible with the naked eye but are present as very finely divided gas droplets.

Furthermore the droplet size distribution is preferably narrow. The average diameter of the gas bubbles is in the range of from 50 to 500$\mu$m, more preferably from 50 to 400 $\mu$m and even more preferably from 100 to 300 $\mu$m.

The preferred emulsions are rather firm products which are spoonable or spreadable and characterised by a Stevens hardness value of from 40 to 700 g at a temperature of 5 °C when measured according to the conditions specified in the examples, preferably 100 to 400 g, more preferred 100 to 300 g. Optionally the emulsion comprises further additives that may contribute to its structure and functionality. These additives are preferably selected from the group comprising emulsifiers, thickeners, acidifiers, proteins.

It will be appreciated that the amount and type of further ingredients may be dependent on the type of final product i.e. for example dairy spread alternatives, cooking cream.

In a preferred embodiment the products comprise fat in an amount of from 20 to 30 wt% whereby the amount of vegetable fat is from 90 to 100 wt% on total fat, quark, thickener, milk protein, salt, gelatin, acidifier to obtain a pH from 4 to 5 and nitrogen gas in an amount of from 4 to 10 volume%.

Preferred emulsions have a relatively low emulsifier level. Most preferred the amount of emulsifier is below 0.5 wt%, even more preferred from 0.01 to 0.2 wt%. The emulsifier is preferably selected from the group comprising monoglycerides, diglycerides, lecithin, polyoxysorbitan monostearate (Tween™ ), citric acid ester, diacetyl tartaric acid ester, lactic acid ester, phospholipids other than lecitin, or a combination thereof.

Optionally the emulsion comprises a thickener. Especially for acidified products with a spreadable or spoonable consistency, the inclusion of a thickener is preferred. The amount of thickener is preferably from 0.1 to 2 wt%, more preferred from 0.3 to 1 wt%. Preferred thickeners are selected from the group comprising guar gum, xanthan gum, starch, gelatin, locust bean gum, carrageenan, agar or a combination thereof.

The products comprise at least some protein to contribute to structure, in the acidified products, and to contribute to taste. The preferred source of protein is milk protein or soy protein. The amount of protein is preferably from 0.5 to 10 wt%.

Optionally further ingredients are included in the emulsion. Examples of such ingredients are health benefit agents such as phytosterols, vitamins, minerals; colouring agents, flavouring agents and preservatives.

Although any suitable process for inclusion of gas may be used to prepare a product according to the invention, it is highly preferred that the products are prepared in a process which easily leads to gas droplets that are finely divided in the product and which show a narrow droplet size distribution.

Therefore in a preferred aspect the invention relates to a process for preparing the products according to the invention, wherein a mixture comprising oil, water and protein is provided and gas is pumped into this mixture under a pressure of from 2 to 5 bar (2x10exp5 to 5x10exp5 Pa). A further advantage of this process is that the products obtained are stable and gas does not diffuse away very quickly.

In this process it is preferred that the oil is essentially liquid at the moment the gas is pumped in. To facilitate this, the temperature of the emulsion when the gas is pumped in is preferably from 65 to 85 °C, more preferred from 70 to 75 °C.

Preferably the process is carried out such that following the inclusion of the gas, the product is filled into packaging material under a pressure which is about atmospheric pressure.

Further ingredients such as acidifiers, thickeners, taste and flavour ingredients, herbs and spices and the like are preferably added before the gas is introduced.

In a further preferred embodiment, the invention further relates to a process for preparing the oil in water emulsion, which comprises the step of

emulsifying a fat phase with an aqueous phase, acidifying the obtained emulsion, optionally adding further ingredients such as protein, thickener, herbs, spices, introducing nitrogen gas with a dosing pressure of from 2 to 5 bar (2x10exp5 to 5X10exp5 Pa) at a product temperature from 70 to 85°C, filling the product into packaging when the amount of gas is from 4 to 15 vol% at a temperature of from 70 to 85°C, wherein the pressure at the filling point is around atmospheric conditions.

- The invention is now illustrated by the following nonlimiting examples.

**Example**

General

determination of Stevens hardness value.

Apparatus used: Stevens Texture Analyser model LFR

Probe used: plastic cylinder with diameter of 12.7 mm Settings of the Stevens Texture analyser:
Penetration depth: 10 mm
Penetration speed: 0.5 mm/sec
The hardness value is determined in grams/cm$^2$.
The temperature is 5°C.

Determination of gas volume in final product

The gas volume measurement is en a measurement of the specific volume of the product. I.e. fixed volume of a tub and comparison of weight without versus with nitrogen in the product. The measurement is ideally done at storage temperature with a pre-cooled measurement tub. The gas is removed by standard degassing methods.
The following method is suitable for determination of volume of gas in product

1. Density determination by weight

Apparatus and Equipment

Density measurement cup, made of stainless steel, with volume of 100 ml,
Metal bar

Procedure

**Measurement**

- Place the empty density measurement cup on a balance
- Tare the balance
- Fill the density measurement cup till the rim with degassed product
- Scrape off the excess product at the rim of the measurement cup to bring the product on water level line with the rim of the cup.
- Clean the density measurement cup and wipe it off
- Place the empty density measurement cup on a balance
- Tare the balance

- Fill the density measurement cup with the product with a specific gas content
- Measure the weight of the density measurement cup with the product with $N_2$ content

**Calculation**

$$\frac{\text{weight of sample without gas [g] - weight of sample with gas}}{\text{weight of sample without gas}} \bullet \; 100\; \% \; = \; \% \; \text{gas}$$

<u>**Measurement of size of gas bubble**</u>

**Introduction**

X-ray microtomography (XRT) was used to visualise gas bubbles in aerated spreads. XRT can probe the microstructure non-invasively into a few millimetres depth with an axial and lateral resolution down to a few micrometers. The contrast in XRT images is based on the difference in absorption of X-rays by the constituents of the sample (e.g. water and air). XRT allows observations under environmental conditions without sample disturbing preparations.

**Materials and methods**

Samples were imaged using a Skyscan 1072 desktop XRT system (http://www.skyscan.be). XRT produces two-dimensional images of projections of the sample. A set of flat cross sections (1024 * 1024 pixels) was obtained after tomographical reconstruction of images acquired under different rotations over 180 degrees with a step size of 0.45 degrees. The spread samples were imaged using plastic straws with an inner diameter of 2.9 mm. The features in the stacks of 2D images were identified and measured using an image analysis toolbox (DIPlib vers. 1.4.1 from the Delft University of Technology, NL) running under MATlab (vers.6r13 from MathWorks). For visualisation in 3-D space, isosurface rendering was used (Amira 3.0 from TGS). This was mainly done by segmentation using thresholding (Russ, J.C. (1999) The image processing handbook. 3e edition, CRC Press, Florida, USA) followed by surface generation with constrained smooting. To reduce noise a median filter was used.
The gas bubble size and the relative volume of gas bubbles were calculated from the stack of segmented horizontal cross sections (see visualisation) using image analysis (about 400 images per sample). The apparent bubble sizes were calculated from the equivalent circle diameters of the profiles of gas bubbles in the 2D images (cross sections). The equivalent circle diameter is the diameter of a circle having the same area as the object. The area is the number of pixels within the object, which is straightforwardly determined by counting. The volume fraction is equivalent to the area fraction. For each cross section the arithmetic mean diameter (apparent size) was calculated.

**Example 1: oil in water emulsion**

The measured value is expressed as % $N_2$

| Ingredient composition in wt (%) | |
|---|---|
| Quark | 24 |
| Vegetable Fatblend* | 26 |
| Buttermilk powder | 6.7 |
| Salt | 0.45 |
| Gelatin | 0.5 |
| Locust bean gum | 0.3 |
| K-Sorbate | 0.1 |
| Acid | To pH 4.8 |

(continued)

| Ingredient composition in wt (%) | |
|---|---|
| water | Up to 100% |

The fat is a mixture of rapeseed oil and an interesterified blend of palm oil and coconut oil with a solid content at 10 °C of about 20% and a solid content of about 10% at 20 °C.

Water phase and fat phase ingredients except for acids were mixed at about 70 °C. After mixing the composition was pasteurized at 85°C for 10 minutes, and cooled down to 44°C, after which homogenisation at 200 bar took place. To the homogenized composition acid was added, until a pH of about 4.8 was reached. This was followed by heating the mixture to 85 °C. The obtained product was pumped through a mixer and a heat exchanger to the filling machines while at a temperature of 75°C before filling into containers. Just before the product was dosed into containers, nitrogen was pumped into the product at a dosing pressure of about 3 to 4 bar. At the filling point where product was filled in packaging, the pressure was changed to atmospheric pressure. The product was cooled down to below 10°C and stored at chill temperature. Gas volume was 7 vol% and gas bubbles were between 100 and 300 μm.

The Stevens value hardness of this product was about 100 g at 5°C after storage for 1 week at that temperature. The resulting product was surprisingly stable and showed the desired melting behaviour and spreadability on consumption.

**Example 2: Consumer testing**

Product A is a product according to the invention as described in example 1 above. Product B is a product made from the same ingredients but not being aerated.

The test involves a comparison of product A and B and having the consumer to give their opinion or to choose the preferred product.

**Appearance test:**

209 consumer tested product A and B.

| | | Product A | Product B |
|---|---|---|---|
| Appearance (7-point scale; 7 being exceptionally good) mean | | 5.55 | 5.37 |
| Consistency (7-point scale; 7 being exceptionally good) mean | | 5.43 | 4.99 |
| Consistency (thickness) | too thick % | 4 | 20 |
| | just right % | 88 | 79 |
| | too thin % | 8 | 1 |
| consistency (fluffiness) | too fluffy % | 7 | 0 |
| | just right % | 87 | 71 |
| | not fluffy enough % | 6 | 29 |
| consistency perceptible in the mouth (7-point scale; 7 being exceptionally good) mean | | 5.14 | 4.74 |
| spreadability (7-point scale; 7 being exceptionally good) mean | | 5.64 | 5.37 |
| fat perception | too fatty % | 6 | 26 |
| | just right % | 90 | 74 |
| | too little fatty % | 3 | 0 |
| taste (7-point scale; 7 being exceptionally good) mean | | 5.46 | 5.16 |

7-point schale was divided as follows:

| 7 | exceptionally good |
|---|---|
| 6 | very good |
| 5 | good |
| 4 | quite good |
| 3 | neither good nor bad |
| 2 | bad |
| 1 | very bad |

**Comparison test:**

209 consumers were asked which of the tested products were preferred: 63% preferred product A, 36% preferred product B and 1% didn't have a preference.

Conclusion:

Overall consumers liked the product according to the invention better than the non-aerated product.

**Claims**

1.    An acidified edible oil in water emulsion with a pH from 3.5 to 6, comprising protein and from 1 to 40 wt% of a fat wherein the fat comprises 20 to 100 wt % of a vegetable fat composition on total fat, and wherein the composition comprises from 4 to 15 volume% of a gas, wherein the average diameter of the gas bubbles is in the range of from 50 to 500 $\mu$m.

2.    Emulsion according to claim 1 wherein the gas is selected from the group comprising nitrogen, carbon dioxide, argon, air or a combination thereof.

3.    Emulsion according to claim 1 or 2 wherein the fat comprises from 50 to 100 wt% of a vegetable fat.

4.    Emulsion according to any of claims 1 to 3 wherein the emulsion has a Stevens hardness value at 5°C of 40 to 700g.

5.    Emulsion according to any of claims 1 to 4 comprising fat in an amount of from 20 to 30 wt% whereby the amount of vegetable fat is from 90 to 100 wt%, and further comprising quark, thickener, milk protein, salt, gelatin, acidifier to obtain a pH from 4 to 5 and nitrogen gas in an amount of from 4 to 10 volume%.

6.    Process for preparing an emulsion according to any of claims 1-4 wherein a mixture comprising oil, water and protein is provided, and gas is pumped into this mixture under a pressure of from 2 to 5 bar (2x 10exp5 to 5x 10exp5 Pa).

7.    Process according to claim 6 wherein the temperature of the mixture when gas is pumped in is such that the oil is essentially liquid at the moment the gas is pumped in.

8.    Process according to claim 6 or 7 wherein the temperature of the mixture when gas is pumped in is from 65 to 85 °C.

**Patentansprüche**

1.    Gesäuerte essbare Öl-in-Wasser-Emulsion mit einem pH von 3,5 bis 6, die Protein und 1 bis 40 Gewichts-% eines Fettes umfasst, wobei das Fett 20 bis 100 Gewichts-% einer Pflanzenfettzusammensetzung, bezogen auf das Gesamtfett, umfasst und wobei die Zusammensetzung 4 bis 15 Volumen-% eines Gases umfasst, wobei der durchschnittliche Durchmesser der Gasblasen im Bereich von 50 bis 500 $\mu$m liegt.

2.    Emulsion gemäß Anspruch 1, wobei das Gas ausgewählt ist aus der Gruppe, umfassend Stickstoff, Kohlendioxid, Argon, Luft und eine Kombination davon.

**3.** Emulsion gemäß Anspruch 1 oder 2, wobei das Fett 50 bis 100 Gewichts-% eines Pflanzenfettes umfasst.

**4.** Emulsion gemäß einem der Ansprüche 1 bis 3, wobei die Emulsion einen Stevens-Härtewert bei 5 °C von 40 bis 700 g hat.

**5.** Emulsion gemäß einem der Ansprüche 1 bis 4, umfassend Fett in einer Menge von 20 bis 30 Gewichts-%, wobei die Menge an Pflanzenfett 90 bis 100 Gewichts-% ist, und ferner umfassend Quark, Verdickungsmittel, Milchprotein, Salz, Gelatine, Säuerungsmittel, um einen pH von 4 bis 5 zu erhalten, und Stickstoffgas in einer Menge von 4 bis 10 Volumen-%.

**6.** Verfahren zur Herstellung einer Emulsion gemäß einem der Ansprüche 1 bis 4, wobei ein Gemisch, das Öl, Wasser und Protein umfasst, bereitgestellt wird, und Gas unter einem Druck von 2 bis 5 bar (2 x $10^5$ bis 5 x $10^5$ Pa) in dieses Gemisch gepumpt wird.

**7.** Verfahren gemäß Anspruch 6, wobei die Temperatur des Gemisches, wenn Cas eingepumpt wird, so ist, dass das Öl in dem Moment, in dem Gas eingepumpt wird, im Wesentlichen flüssig ist.

**8.** Verfahren gemäß Anspruch 6 oder 7, wobei die Temperatur des Gemisches, wenn Gas eingepumpt wird, 65 bis 85 °C ist.


**Revendications**

**1.** Émulsion huile-dans-l'eau comestible acidifiée possédant un pH de 3,5 à 6, comprenant une protéine et de 1 à 40 % en poids d'une graisse, dans laquelle la graisse comprend de 20 à 100 % en poids d'une composition de graisse végétale par rapport à la graisse totale et dans laquelle la composition comprend de 4 à 15 % en volume d'un gaz, le diamètre moyen des bulles de gaz étant compris dans la plage allant de 50 à 500 μm.

**2.** Émulsion selon la revendication 1, dans laquelle le gaz est choisi dans le groupe comprenant l'azote, le dioxyde de carbone, l'argon, l'air ou une de leurs combinaisons.

**3.** Émulsion selon la revendication 1 ou 2, dans laquelle la graisse comprend de 50 à 100 % en poids d'une graisse végétale.

**4.** Émulsion selon l'une quelconque des revendications 1 à 3, dans laquelle l'émulsion a une valeur de dureté de Stevens à 5°C de 40 à 700 g.

**5.** Émulsion selon l'une quelconque des revendications 1 à 4 comprenant une graisse en une quantité de 20 à 30 % en poids, la quantité de graisse végétale étant de 90 à 100 % en poids et comprenant en outre un fromage blanc, un épaississant, une protéine de lait, un sel, une gélatine, un acidifiant pour obtenir un pH de 4 à 5 et de l'azote gazeux en une quantité de 4 à 10 % en volume.

**6.** Procédé de préparation d'une émulsion selon l'une quelconque des revendications 1 à 4, dans lequel un mélange comprenant une huile, de l'eau et une protéine est fourni et un gaz est pompé dans le mélange sous une pression de 2 à 5 bars (2 x $10^5$ à 5 x $10^5$ Pa).

**7.** Procédé selon la revendication 6, dans lequel la température du mélange lorsque le gaz est pompé est telle que l'huile est essentiellement liquide au moment où le gaz est pompé.

**8.** Procédé selon la revendication 6 ou 7, dans lequel la température du mélange lorsque le gaz est pompé est de 65 à 85°C.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 841856 A
- EP 848590 A
- WO 970466 A
- US 6497914 B
- WO 9412063 A
- WO 03053174 A
- US 4578278 A

**Non-patent literature cited in the description**

- *Fette, Seifen, Anstrichmittel,* 1978, vol. 80, 180-186
- **Russ, J.C.** The image processing handbook. CRC Press, 1999